(19) Europäisches Patentamt

European Patent Office

Office européen des brevets

(11) **EP 3 293 439 A1**

(12) # EUROPEAN PATENT APPLICATION
published in accordance with Art. 153(4) EPC

(43) Date of publication:
**14.03.2018 Bulletin 2018/11**

(21) Application number: **16846843.7**

(22) Date of filing: **12.09.2016**

(51) Int Cl.:
*F17D 1/20* (2006.01)     *F17D 5/00* (2006.01)
*F16L 55/045* (2006.01)     *F17D 1/14* (2006.01)

(86) International application number:
**PCT/KR2016/010275**

(87) International publication number:
**WO 2017/048022 (23.03.2017 Gazette 2017/12)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **18.09.2015   KR 20150132359**

(71) Applicant: **Flowtech Co., Ltd.**
**Incheon, 21634 (KR)**

(72) Inventors:
• **YANG, Jae Gu**
  **Incheon 22001 (KR)**
• **OH, Jae Wook**
  **Incheon 22238 (KR)**
• **YANG, Ji Suk**
  **Incheon 22001 (KR)**

(74) Representative: **Gulde & Partner**
**Patent- und Rechtsanwaltskanzlei mbB**
**Wallstraße 58/59**
**10179 Berlin (DE)**

(54) **WATER PIPING SYSTEM WITH SLAM MITIGATION FUNCTION OF CHECK VALVE, AND CONTROL METHOD THEREFOR**

(57)     The present invention relates to a water piping system. More particularly, it relates to a water piping system that can alleviate water hammer due to slamming of a check valve by reducing the pressure difference between the front end and the rear end of the check valve by supplying some of fluid at the rear side of the check valve to the front side of the check valve when a pump is stopped, and a method of controlling the water piping system. The present invention includes: a sub-pipe having both ends connected to a front side and a rear side of the check valve, respectively, and supplying some of fluid at the rear side of the check valve to the front side of the check valve to suppress negative pressure and low pressure that is generated at the front end of the check valve when the pump is stopped; and a control valve disposed in the sub-pipe to open and close a flow channel.

[FIG. 2]

EP 3 293 439 A1

**Description**

BACKGROUND OF THE INVENTION

**Technical Field**

The present invention relates to a water piping system. More particularly, it relates to a water piping system that can alleviate water hammer due to slamming of a check valve by reducing the pressure difference between the front end and the rear end of the check valve by supplying some of fluid at the rear side of the check valve to the front side of the check valve when a pump is stopped, and a method of controlling the water piping system.

**Background Art**

In general, when a pump is suddenly stopped or a valve is suddenly closed in a water piping system, a transient condition in which the flow rate of fluid rapidly changes is generated, and this phenomenon is called water hammer. Due to the water hammer, the pressure in the pipe rapidly increases or the pressure in the pipe drops under the saturation vapor pressure of water and vapor is produced, and then the pipe line may be broken or damaged by shock waves in the process of column separation and return.

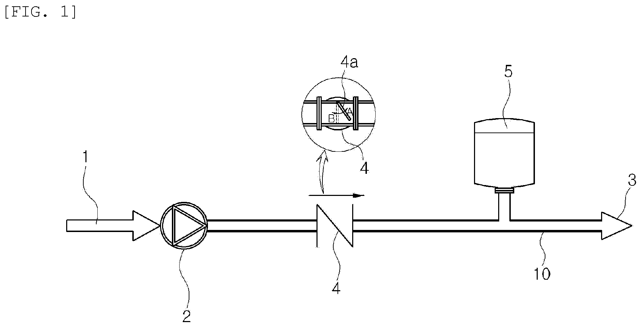

For example, a common piping system shown in FIG. 1 includes a pump 2 that pressurizes water flowing inside through an inlet 1, a main pipe 10 through which the pressurized water flows, and an outlet 3 to which the water from the main pipe 10 is discharged. A check valve 4 for preventing backflow, a pressure tank 5 for preventing water hammer, a flexible joint (not shown) for preventing vibration, and a shutoff valve (not shown) for connecting/disconnecting the flow of water to the outlet 3 may be installed in a main pipe 10.

In this water piping system, when the pump 2 suddenly stops, the fluid flowing through the main pipe 10 temporarily keeps flowing through the main pipe 10 in the main flow direction by inertia, but the discharge amount from the pump 2 rapidly decreases. Accordingly, negative pressure is generated at the rear side (outlet port) of the pump, vapor cavity is generated in the pipe, and the fluid flows backward, whereby the vapor cavity breaks and large pressure waves are generated. Therefore, the main pipe 10 and the pump 2 may be broken. Accordingly, a pressure tank 5 is provided to alleviate water hammer due to vapor cavity.

Meanwhile, water hammer may be generated by slamming due to sudden closing of the check valve 4. Slamming is a phenomenon in which, as shown in FIG. 1, a disc 4a of the check valve 4 is turned in the flow direction of fluid while the pump 2 is operated, as indicated by 'A', but is suddenly closed to the position 'B' by backflow fluid when the pump 2 is suddenly stopped, whereby shock waves are generated by the high pressure of the fluid. That is, slamming means a phenomenon in which the disc 4a slams shut causing a bang. Shock waves due to the slamming are propagated to the main pipe 10 and the pump 2, and it may break the water piping system.

A pressure change (ΔH) due to slamming of a check valve, as can be seen from the following Equation (1), is determined by a backflow speed change (ΔV) of fluid at the last moment when the disc 4a of the check valve 4 is closed.

$$\Delta H \;=\; (C/g)\Delta V \qquad\qquad\qquad Equation\ (1)$$

(where ΔH : pressure change (shock wave), C : propagation speed of shock wave based on properties of material of pipe, g : acceleration of gravity, ΔV : backflow speed change of fluid)

In detail, when the discharge amount rapidly decreases due to sudden stopping of the pump 2, the fluid that is flowing starts to flow backward after a period of time, so the disc 4a of the check valve 4 is closed. At the moment when the disc 4a is closed, the flow speed of the fluid is rapidly changed (the disc is rapidly closed), so negative pressure or low pressure is generated at the front end (primary side) of the check valve 4, while a rising pressure wave (slamming) are generated at the rear end (secondary side) of the check valve 4. A slow closing check valve etc. have been designed to solve this problem (rapid closing of the disc of a check valve), but the more the disc 4a is closed, the larger the contact area between the backflow fluid and the portion of the disc 4a to which force is applied by the fluid, so the closing speed of the disc 4a is gradually increased. Accordingly, when the disc is fully closed, the disc is rapidly closed due to an increase in the closing speed of the disc. Further, since the disc 4a is slowly closed at the early stage, the amount or the speed of the backflow fluid is increased, so larger slamming is caused. When the closing speed of the disc 4a and the backflow speed of the fluid are increased, as described above, as can be seen from Equation (1), the backflow speed change (ΔV) of the fluid increases and the pressure change (ΔH) also increases. Accordingly, high pressure is instantaneously generated at the rear end (secondary side) of the check valve, and accordingly, water hammer (slamming) is generated. Further, since negative pressure or low pressure is generated at the front end (primary side) of the check valve 4 by rapid closing of the disc 4 of the check valve 4, a vacuum shutoff vale and an air valve are used at present. However, the effect of preventing vacuum cannot be achieved and the degree of removing vacuum after the vacuum is generated is a limit of the current technology.

Therefore, in order to alleviate water hammer due to slamming of the check valve 4, it is required to effectively suppress negative pressure or low pressure at the front end of the disc 4a and prevent the pressure difference at the front and rear ends of the disc 4a from excessively increasing, thereby preventing the disc 4a of the check valve 4 from rapidly closing.

## Disclosure

## Technical Problem

The present invention has been made in an effort to solve the problems with water piping systems of the related art and an object of the present invention is to provide a water piping system that can attenuate slamming due to rapid closing of a check valve and corresponding water hammer by preventing or minimizing negative pressure or low pressure at the front end of a check valve by supplying supplementary water at positive pressure to the front end of the check valve, and by reducing a pressure difference between the front end and the rear end, when a pump in a pipe is suddenly stopped, and a method of controlling the water piping system. That is, the object of the present invention is to alleviate slamming and water hammer using a method (controlling the flow of fluid in a pipe) other than physical methods for slowly closing a check valve.

## Technical Solution

In order to achieve the above object, according to one aspect of the present invention, there is provided a water piping system having a function of alleviating slamming of a check valve, the system including: a pump pressurizing fluid; a main pipe for delivering the fluid pressurized by the pump; a check valve disposed at an outlet port of the pump to prevent backflow of fluid; a sub-pipe having both ends connected to a front side and a rear side of the check valve, respectively, to supply some of fluid at the rear sides of the check valve to the front side of the check valve therethrough when the pump is stopped; and a control valve disposed in the sub-pipe to open and close a flow channel.

The pump may be a plurality of pumps connected to each other in parallel, the sub-pipe may be a plurality of sub-pipes connected to the main pipe and respectively connected to front ends of check valves disposed at outlet ports of the pumps, and the control valve may be disposed in each of the sub-pipes.

The sub-pipes may have first ends respectively connected to the front sides of the check valves disposed at the outlet ports of the pumps and second ends connected to a header, and the header may be connected to the main pipe.

The control valve may be closed after a predetermined period of time passes from the moment when the pump is stopped. The water piping system may further include a controller controlling opening and closing of the control valve, in which the controller may close the control valve after a predetermined period of time passes from the moment when the pump is stopped.

The system may further include: a controller controlling opening and closing of the control valve; a first pressure sensor sensing pressure at the front side of the check valve of the main pipe; and a second pressure sensor sensing pressure at a rear side of the check valve of the main pipe, in which the controller may receive and compare pressures at the front side and the rear side of the check valve sensed by the first pressure sensor and the second pressure sensor, and may close the control valve after a predetermined period of time passes when the pressure at the rear side of the check valve is higher than the pressure at the front side of the check valve as the result of comparing.

The system may further include a differential pressure sensor sensing a pressure difference between the front side and the rear side of the check valve, in which the control valve may close after a predetermined period of time passes when it is determined that pressure at the rear side is higher than pressure at the front side of the check valve on the basis of the pressure difference sensed by the differential pressure sensor.

The system may further include a flow rate sensor disposed at the rear side of the check valve of the main pipe, in which the control valve may be closed after a predetermined period of time passes when it is determined that the pump has been stopped on the basis of flow of fluid sensed by the flow rate sensor.

The control valve may be a mechanical slow closing valve that is closed after a predetermined period of time passes from the moment when the pump is stopped, and the control valve may be a slow closing check valve.

The control valve may include: a valve body disposed in the sub-pipe connecting a front end and a rear end of the check valve in the main pipe; and an actuator having a disc dividing an inside horizontally to the left and right therein, having both ends connected to the front end and the rear end of the check valve in the main pipe, respectively, and opening and closing the valve body when the disc is moved by a pressure difference between the front end and the rear end of the check valve. Further, the system may further include a needle valve disposed at a front side of the actuator.

The sub-pipe connected to the front side of the check valve may have an end extending in the main pipe and curved toward the check valve.

The sub-pipe connected to the front side of the check valve may have an end extending in the main pipe and diagonally disposed toward the check valve.

A pressure tank may be connected between a rear side of the control valve in the sub-pipe and the rear side of the check valve. The control valve may include: a valve body disposed in the sub-pipe having a front end connected to a front end of the check valve of the main pipe and a rear end connected to the pressure tank; and an actuator having a disc dividing an inside horizontally to the left and right therein, having both ends connected to the front end and the rear end of the check valve, respectively, and opening and closing the valve body when the disc is moved by a pressure difference between the front end and the rear end of the check valve. The system may further include a needle valve disposed at a front side of the actuator.

A plurality of pumps may be connected to each other in parallel, a plurality of sub-pipes may be connected to the pressure tank and respectively connected to front ends of check valves disposed at outlet ports of the pumps, and a control valve may be disposed in each of the sub-pipes.

The sub-pipes may have first ends respectively connected to the front ends of the check valves disposed at the outlet ports of the pumps and second ends connected to a header, and the header may be connected to the pressure tank.

The system may further include a diffuser disposed in the pressure tank and connected to the sub-pipe, in which the diffuser may be connected to the sub-pipe connected to a rear side of the control valve, may be annularly disposed around an inner side of the pressure tank, and may have a plurality of spray holes formed through a surface thereof.

The system may further include a diffuser disposed in the pressure tank and connected to the sub-pipe, in which the diffuser may be connected to the sub-pipe connected to a rear side of the control valve and may have an end curved in an elbow shape.

According to another aspect of the present invention, there is provided a method of controlling the water piping system having a function of alleviating slamming of a check valve., the method including: delivering fluid through the main pipe by operating the pump; opening the control valve disposed in the sub-pipe; monitoring whether the pump is operated; and supplying fluid at the rear side of the check valve to the front side of the check valve through the sub-pipe by keeping the control valve open for a predetermined period of time when the pump is stopped, and closing the control valve after a predetermined period of time passes.

According to another aspect of the present invention, there is provided a method of controlling the water piping system described above, the method comprising: delivering fluid through the main pipe by operating the pump; opening the control valve disposed in the sub-pipe; sensing pressure at the front side and pressure at the rear side of the check valve of the main pipe; and comparing the sensed pressures at the front side and the rear side of the check valve and closing the control valve after a predetermined period of time passes when the pressure at the rear side of the check valve is higher than the pressure at the front side of the check valve, as a result of the comparing.

**Advantageous Effects**

According to the present invention, it is possible to alleviate slamming due to sudden closing of the check valve and corresponding water hammer by minimizing negative pressure and low pressure at the front end of the check valve by supplying some of the fluid at the rear side of the check valve to the front side of the check valve, and by maintaining positive pressure to reduce the pressure difference between the front end and the rear end of the check valve, when the pump is stopped.

**Description of Drawings**

FIG. 1 is a view schematically showing a common water piping system of the related art;

FIGS. 2 is a view showing the configuration of a water piping system having a function of preventing slamming of a check valve according to the present invention;

FIGS. 3 is a view schematically showing a change in flow of fluid through a main pipe and a sub-pipe by operation of a control valve of the present invention;

FIG. 4 is a view showing a water piping system equipped with a control valve electrically operated to open/close in accordance with an embodiment of the present invention;

FIG. 5 is a flowchart showing a process of controlling a water piping system with an electric control valve, as shown in FIG. 4;

FIG. 6 is a view showing a water piping system equipped with a control valve electrically operated to open/close in accordance with another embodiment of the present invention;

FIG. 7 is a flowchart showing a process of controlling a water piping system with an electric control valve, as shown in FIG. 6;

FIG. 8 is a view showing a water piping system equipped with a control valve controlled by a differential pressure sensor in accordance with another embodiment of the present invention;

FIG. 9 is a view showing a water piping system equipped with a control valve controlled by a flow rate sensor in accordance with another embodiment of the present invention;

FIG. 10 is a view showing the configuration of a water piping system equipped with an actuator, a valve body, and a needle valve for a control valve in accordance with the present invention;

FIGS. 11 is a view showing the configuration of water piping systems equipped with a sub-pipe structure according to an embodiment of the present invention;

FIGS. 12 is a view showing the configuration of water piping systems including a pressure tank in accordance with another embodiment of the present invention;

FIGS. 13 is a view showing the configuration of a water piping system equipped with a pressure tank, and an actuator, a valve body, and a needle valve for a control valve in accordance with the present invention; and

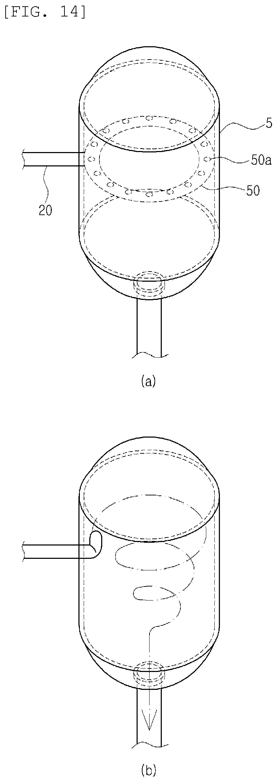

FIGS. 14 is a view showing the configuration of a water piping systems including a pressure tank having a diffuser therein in accordance with the present invention.

<Description of reference characters>

| | |
|---|---|
| 2: pump | 4 : check valve |
| 4a: disc | 5 : pressure tank |
| 10 : main pipe | 20 : sub-pipe |
| 30 : control valve | 50 : diffuser |
| 100 : controller | |

**Mode for Invention**

The configuration and operation of a water piping system having a function of alleviating slamming of a check valve according to the present invention are described in detail with reference to embodiments and the accompanying drawings. The water piping system stated herein includes all kinds of fluid piping systems such as common water supply pipes, circulation pipes for heating/cooling and industrial facilities, pipes for agriculture and industries, and petrochemical plants.

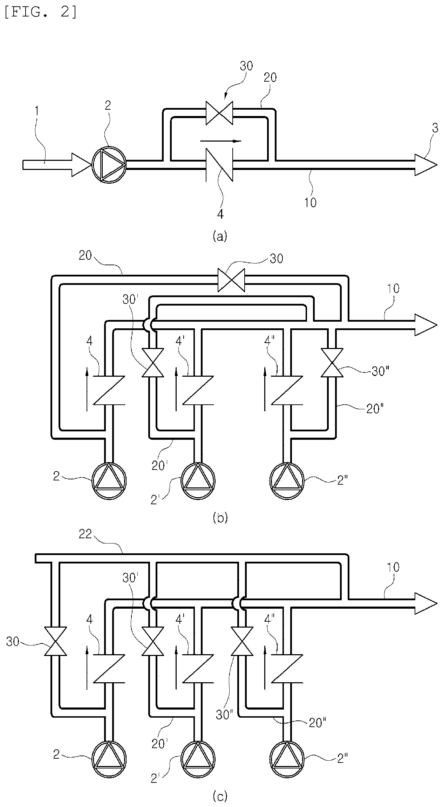

FIGS. 2 is a view showing the configuration of water piping systems having a function of alleviating slamming of a check valve according to the present invention. As shown in the figures, a water piping system according to the present invention includes: a pump 2 that pressurizes fluid; a main pipe 10 that delivers the fluid pressurized by the pump 2; and a check valve 4 that is disposed close to the outlet port of the pump 2 in the main pipe 10 to prevent backflow of fluid, and further includes a sub-pipe 20 and a control valve 30.

The sub-pipe 20 is a pipe for supplying some of fluid from the rear side of the check valve 4 to the front side of the check valve 4 to suppress negative pressure or low pressure that is generated at the front side of the check valve when the pump 2 is stopped. To this end, the sub-pipe 20 has both ends connected to the front side and the rear side of the check valve 4 in the main pipe 10 and is connected to the main pipe 10 in parallel with respect to the check valve 4. The sub-pipe 20 connected to the front side of the check valve 4 in the main pipe 10 may be connected to a portion as close as possible to the check valve 4.

The control valve 30 is disposed in the sub-pipe 20. The control valve 30, which is provided to open/close the flow channel of the sub-pipe 20, is opened when the pump is operated, and is closed after a predetermined period of time passes when the pump is stopped.

In water piping systems including a plurality of parallel pumps 2, 2', and 2", as shown in FIG. 2 (b), a plurality of sub-pipes 20, 20', and 20" is connected to a min pipe 10, second ends of the sub-pipes 20, 20', and 20" are respectively connected to check valves 4, 4', and 4" disposed at the outlet ports of pumps 2, 2', and 2", and control valves 30, 30', and 30" are disposed in the sub-pipes 20, 20', and 20", respectively.

Further, as shown in FIG. 2 (c), first ends of the sub-pipes 20, 20', and 20" may be connected to the front ends of the check valves 4, 4', and 4" disposed at the outlet ports of the pumps 2, 2', and 2", respectively, second ends of the sub-pipes may be connected to a header 22, and the header 22 may be connected to the main pipe 10 through one pipe.

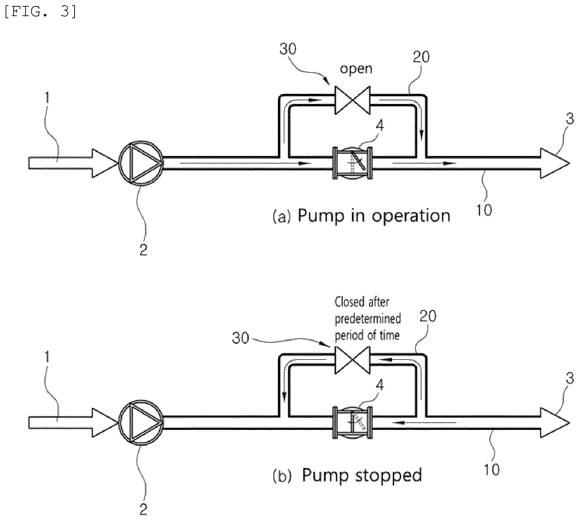

FIGS. 3 (a) and 3 (b) schematically show a change in flow of fluid through the main pipe 10 and the sub-pipe 20 by the control valve 30. As shown in FIG. 3 (a), while the pump is operated, fluid is discharged under high pressure from the outlet port of the pump and the pressure at the front end of the check valve 4 is higher than the pressure at the rear end of the check valve 4 due to friction resistance between the pipe and the valve. Accordingly, fluid is delivered through the main pipe 10 after pushing a disc 4a in the check valve 4. Further, since the control valve 30 is open, the fluid pressurized by the pump flows to the sub-pipe 20 from the main pipe 10 at the front side of the check valve 4 and then flows back into the main pipe 10 at the rear side of the check valve 4. The ratio of the fluid flowing through the check valve 4 in the main pipe 10 and the fluid flowing to the sub-pipe 20 is a function of the diameters and lengths of the two pipes and the flow speed.

Further, as shown in FIG. 3 (b), when the pump 2 is stopped, discharging of fluid from the pump is suddenly stopped, so the pressure at the front side of the check valve 4 drops, and accordingly fluid flows backward through the check valve 4 and the disc 4a in the check valve 4 starts to close. As described above, the disc 4a of the check valve 4 is rapidly closed by backflow, in which generation of negative pressure or low pressure is accelerated at the front side of the check valve 4, whereby slamming of the check valve 4 is generated. However, since the sub-pipe 20 and the control valve 30 are additionally disposed in the present invention, the fluid flowing backward at the rear end of the check valve 4 flows through the sub-pipe 20 to the front side of the check valve 4, so it is possible to prevent negative pressure or low pressure, but maintain positive pressure at the front end of the check valve 4. Accordingly, the closing speed of the disc 4a in the check valve 4 is decreased and slamming of the check valve 4 is alleviated.

However, fluid can be supplied only for a predetermined time to the front end of the check valve 4 through the sub-pipe 20 when the pump is stopped. If a large amount of fluid is continuously supplied to the front end of the check valve 4 through the sub-pipe 20, damage may be caused by reverse revolution of the pump, and all the fluid in the pipes returns to the pump, so a large accident may be caused. Accordingly, fluid may be supplied to the front side of the check valve 4 through the sub-pipe 20 temporarily for a predetermined time such that the check valve 4 can be slowly closed. The time may be experimentally determined as an appropriate value in advance, depending on the size or the operation state of the water piping system. According to experimental values, the closing time of the check valve 4 in a piping system equipped with a pressure tank is very short, within several seconds after a pump is suddenly stopped.

In order to supply fluid to the front side of the check valve 4 through the sub-pipe 20 for a predetermined period of time when the pump is suddenly stopped, the control valve 30 may be a slow closing valve that automatically closes or gradually closes when a predetermined period of time passes after the pump is stopped.

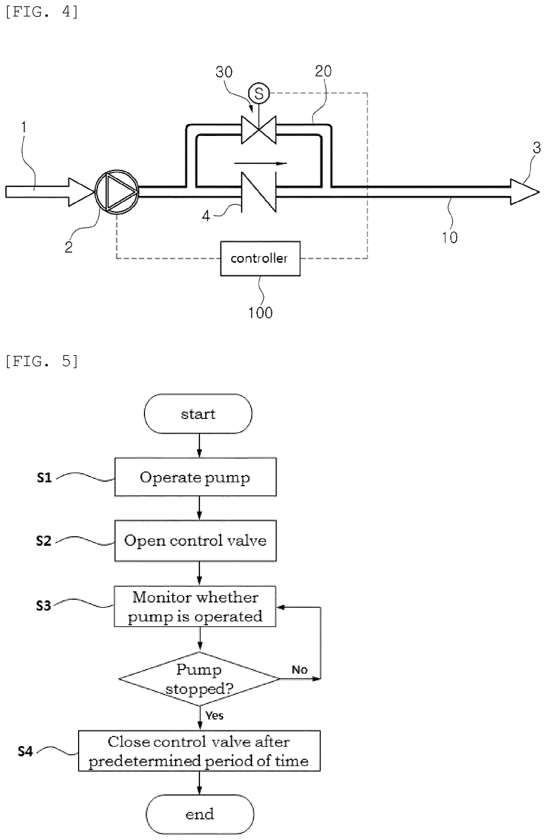

To this end, FIG. 4 shows an example of a water piping system equipped with a control valve 30 that is electrically controlled to open and close. As shown in the figure, the control valve 30 may be an electric valve that is automatically electrically controlled, and a controller 100 for controlling the control valve 30 is provided. The control valve 30 may be configured to control the parts of the entire water piping system including a pump, or to independently control only the control valve 30.

FIG. 5 is a flowchart showing a process of controlling a water piping system with an electric control valve 30, as shown in FIG. 4. The controller 100 first operates the pump to deliver fluid through the water piping system so that the fluid flows through the main pipe 10 and the sub-pipe 20 (S1), and opens the control valve 30 (S2). Next, the controller 100 monitors whether the pump is operated in real time (S3). Monitoring whether the pump is operated may be performed by monitoring the number of revolutions of the pump, monitoring a power supply switch, monitoring a power supply sensor, monitoring a flowmeter, monitoring a pressure sensor, and sensing load current of the pump, etc. Opening and closing the control valve 30 may be performed, depending on pressure to prevent malfunction during idling or no-load operation even if the pump is rotated (operated).

When it is determined that the pump has been stopped as the result of monitoring whether the pump is operated, the controller 100 closes the control valve 30 after a predetermined period of time (input in advance in the controller 100) passes (S4). To this end, the control valve 30 may have a built-in timer to be closed when a predetermined period of time passes after the controller 100 gives a control instruction.

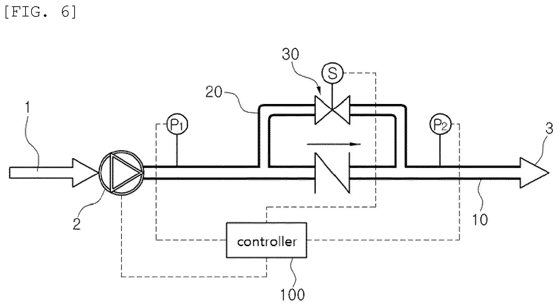

FIG. 6 shows another embodiment of a water piping system equipped with a control valve 30 that is electrically controlled to open and close. As shown in the figure, in this embodiment, an electric valve 30 such as a solenoid valve and a controller 100 are provided. Further, a first pressure sensor P1 and a second pressure sensor P2 for measuring pressure at the front side and the rear side of a check valve 4 are further provided.

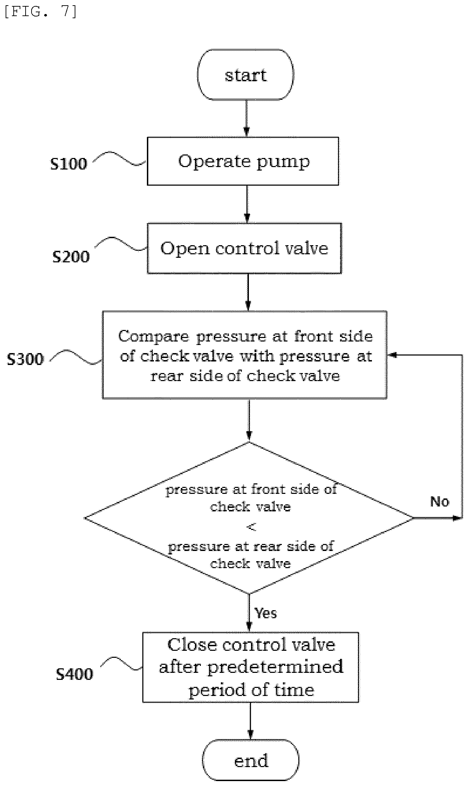

FIG. 7 shows a flowchart illustrating a process of controlling a water piping system equipped with the electric control valve 30, the first pressure sensor PI, and the second pressure sensor P2, as shown in FIG. 6. The controller 100 first operates the pump to deliver fluid through the water piping system so that the fluid flows through the main pipe 10 and the sub-pipe 20 (S100), and opens the control valve 30 (S200). Next, the controller 100 receives in real time pressure values at the front end and the rear end of the check valve 4 from the first pressure sensor P1 and the second pressure sensor P2 and compares the pressure values (S300).

The fact that the pressure at the front end of the check valve 4 is higher means that the pump is in operation, while the fact that the pressure at the rear end of the check valve 4 is higher means that the pump has been stopped. Accordingly, the controller 100 keeps the control valve 30 open when the pressure at the front side of the check valve 4 is higher than the pressure at the rear side (when the pump is in operation), and closes the control valve 30 in other cases, for example, when the pressure at the rear side of the check valve 4 is higher than the pressure at the front side (when the pump is stopped) (S400).

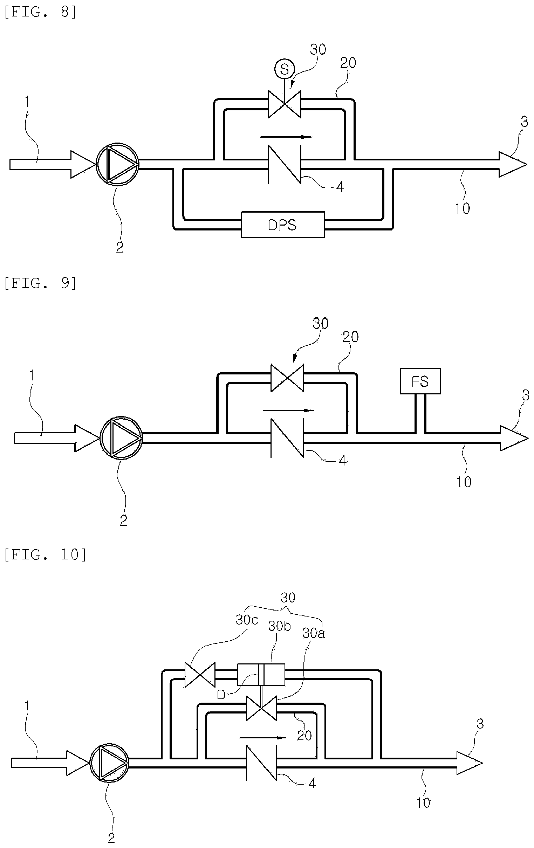

On the other hand, as another embodiment, the control valve 30 may be controlled to open and close by a differential pressure sensor DPS, as shown in FIG. 8. The differential pressure sensor DPS senses a pressure difference between the front side and the rear side of the check valve 4 and closes the control valve 30 after a predetermined period of time passes when it is determined that the pressure at the rear side of the check valve 4 is higher than the pressure at the front side on the basis of the sensed pressure difference.

Further, as another embodiment, the control valve 30 may be controlled to open and close by a flow rate sensor FS, as shown in FIG. 9. The flow rate sensor FS is disposed at the rear side of the check valve 4 of the main pipe 10 to close the control valve 30 after a predetermined period of time passes when it is determined that the pump has been stopped on the basis of the sensed flow of fluid.

Although the control valve 30 is an electrically controlled valve in the above description, the control valve 30 may be a mechanically controlled valve. The mechanical control valve 30 is configured to automatically close after a predetermined period of time passes when the pump is stopped, by a mechanical configuration thereof without a specific part such as the controller 100. The control valve 30 should be a mechanical slow closing valve so that the control valve automatically closes after a predetermined period of time with a pump stopped.

There are various mechanical slow closing valves. For example, the control valve 30 may be a slow closing check valve. In this case, the disc 4a is open while a pump is operated, but when the pump is suddenly stopped, the check valve 4 is closed first and then the control valve 30 in the sub-pipe 20 is closed. That is, a check valve including a hydraulic cylinder that provides a shock-absorbing force opposite to the closing direction of a disc of the control valve may be selected as the control valve 30 so that the disc of the control valve 30 is closed after a predetermined period of time passes. Further, a 'check valve having parallel-cylinder' (Korean Patent No. 10-1487748) by the applicant(s) may be selected as the control valve 30 to further decrease the closing speed of the disc.

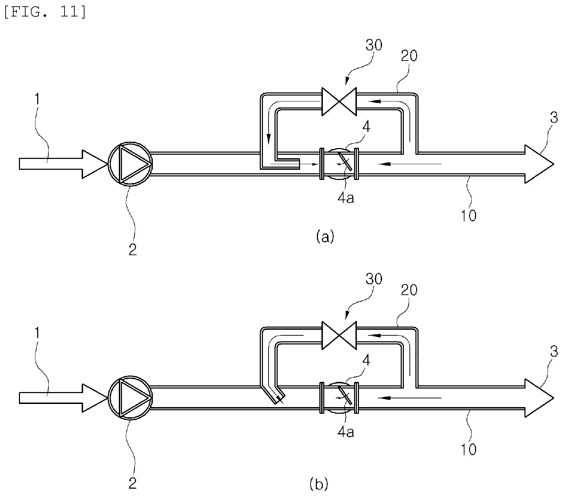

FIG. 10 shows an embodiment of the mechanical slow closing valve. As shown in FIG. 11, the control valve 30 may include an actuator 30b and a valve body 30a such that the valve body 30a is opened and closed by a pressure difference between the front and rear sides of the actuator 30b, and may further include a needle valve 30c.

The valve body 30a is disposed in the sub-pipe 20 connecting the front end and a rear end of a check valve 4 of a main pipe 10 to each other and the actuator 30b is connected to the valve body 30a. In detail, the actuator 30b has a disc D that horizontally divides the inside thereof to the left and right and, both ends of which are connected to the front and rear sides of the check valve 4 of the main pipe 10, respectively, through a hydraulic hose or a common pipe. Further, the disc D in the actuator 30b is connected to a valve unit that connects/disconnects (opens/closes) the flow channel in the valve body 30a so that when the disc D is moved, the valve unit is operated to open/close the flow channel in the valve body 30a. The structure and the connection relationship of the disc D and the valve body 30a are not limited as long as the valve body 30a can be opened/closed when the disc D is moved. The system may be configured such that when the disc D is horizontally moved, the valve unit is horizontally moved to open the flow channel in the valve body 30a, or such that when the disc D is horizontally moved, the valve unit is rotated to open, using a gear assembly such as a rack and pinion between the disc D and the valve unit. When the valve unit is rotated to open and close, the valve body 30a may be a ball valve or a butterfly valve. According to this configuration, when the fluid at the front and rear ends of the check valve flows to the front and rear sides of the actuator 30b, respectively, the disc D in the actuator 30b is moved to any one side by the pressure difference between the front and rear ends. Further, as the disc D is moved, the valve unit of the valve body 30a connected to the disc D is moved and the flow channel of the sub-pipe 20 is closed.

The control valve is controlled to open and close, depending on whether the pump 2 is operated. While the pump 2 is operated, the pressure at the front side is higher than the pressure at the rear side of the check valve 4, and when the pump 2 is stopped, the pressure at the front side is lower than the pressure at the rear side of the check valve 4. Accordingly, while the pump 2 is operated, the disc D in the actuator 30b is moved from the front side to the rear side of the check valve 4 (from the left to the right in FIG. 10), so the valve body 30a is opened and the fluid at the front side of the check valve 4 of the main pipe 10 is supplied to the rear side of the check valve 4 through the sub-pipe 20. In contrast, when the pump 2 is stopped, the pressure at the rear side of the check valve 4 becomes higher, so the disc D in the actuator 30b is moved from the rear side to the front side of the check valve 4 (to the left in the figure), thereby closing the valve body 30a.

A needle valve 30c may be additionally disposed at the front side of the actuator 30b. When the needle valve 30c is provided, it is possible to reduce the speed of the disc D moving from the rear side to the front side by adjusting the amount of fluid flowing to the main pipe out of the actuator 30b when the disc D in the actuator 30b is moved to the front side from the moment when the pump is stopped, by setting the degree of opening in advance, whereby it is possible to achieve the effect of slowly closing the valve body 30a.

Although the front and rear ends of the actuator 30b are connected to the front and rear ends of the check valve, respectively, in the above description, the front end of the actuator 30b may be connected to the sub-pipe connected to the front end of the check valve and the rear end of the actuator 30b may be connected to the sub-pipe connected to the rear end of the check valve.

Further, various mechanical slow closing valves such as a needle valve, a spring type valve, a diaphragm valve, and a relief valve may be used as the control valve 30 as long as they can close after a predetermined period of time passes with a pump stopped.

FIGS. 11 is a view showing the configuration of sub-pipe 20 for a water piping system according to the present invention. As shown in FIG. 11 (a), a sub-pipe 20 connected to the front side of a check valve 4 of a main pipe 10 may be curved in the shape of an elbow toward the check valve 4, with an end extending in the main pipe 10. According to this structure, when a disc 4a in the check valve 4 is closed by backflow of fluid, fluid is supplied to the front side of the check valve 4 through the sub-pipe 20, thereby preventing negative pressure or low pressure. Further, the pressure of the fluid flowing backward through the check valve 4 is offset by the pressure of the fluid supplied through the sub-pipe 20 so that the disc 4a is more slowly closed, whereby it is possible to attenuate slamming of the check valve 4. Further, when the end of the sub-pipe 20 curved in the shape of an elbow faces the check valve 4, reverse revolution of the pump is prevented, so it contributes to stabilizing the piping system. On the other hand, as shown in FIG. 11 (b), a sub-pipe 20 connected to the front side of a check valve 4 may have an end extending in a main pipe 10 and diagonally disposed toward the check valve 4.

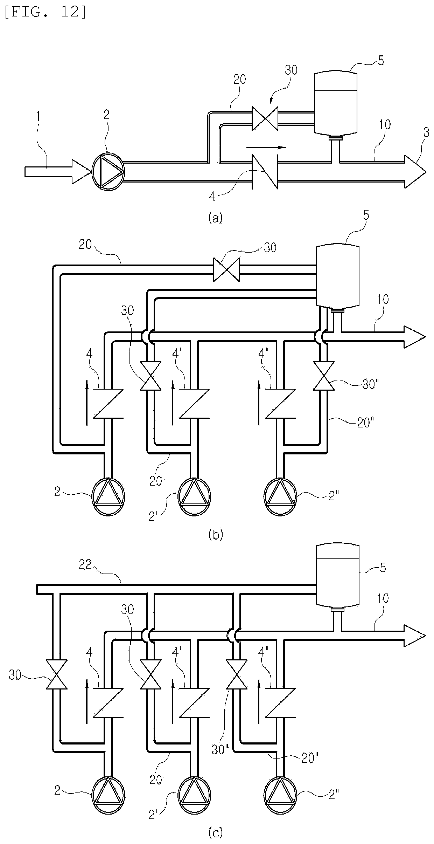

FIGS. 12 is a view showing the configuration of water piping systems according to other embodiments of the present invention. As shown in the figures, the embodiments, similar to the above embodiments, include a sub-pipe 20 connecting the front end and the rear end of a check valve 4 to each other, and a control valve 30, in which a pressure tank 5 is connected between the rear sides of the control valve 30 of the sub-pipe 20 and the rear side of the check valve 4. The pressure tank 5 is usually provided to prevent water hammer in a water piping system, but, as shown in FIG. 1, it was connected individually to the rear side of the check valve 4 of the main pipe 10 in the related art. In the present invention, the rear side of the pressure tank 5 is connected to the rear side of the check valve 4 of the main pipe 10 and the rear side of the control valve 30 is connected to the upper portion of the pressure tank 5, whereby it is possible to prevent dead water, which will be described below.

Dead water means a phenomenon in which contamination is generated by fluid remaining for a long period of time in the pressure tank 5 connected to the main pipe 10 to prevent water hammer. In particular, when the water piping system is used for delivering tap water, purified water, or milk, the tap water, purified water, or milk to be supplied to the consumers may be contaminated by dead water, so there is a need for measurements for preventing this problem.

Accordingly, in the present invention, the fluid in the pressure tank 5 is continuously discharged to the main pipe 10 by connecting the pressure tank 5 to the sub-pipe 20 so that fluid flows into the pressure tank 5 through the sub-pipe 20 when the pump is operated, whereby it is possible to prevent fluid from remaining for a long period of time and suppress dead water. As described above, when the pressure tank 5 is connected to the sub-pipe 20, it is possible to supply the fluid at the rear side of the check valve 4 to the front side of the check valve 4 through the sub-pipe and to prevent dead water, when the pump is stopped, so it is possible to achieve a double purpose.

FIG. 12 (a) shows a system with one pump 2 is exemplified, in which only one sub-pipe 20 is connected to the pressure tank 5. In water piping systems including a plurality of parallel pumps 2, 2', and 2", as shown in FIG. 12 (b), a plurality of sub-pipes 20, 20', and 20" is connected to a pressure tank 5 and are respectively connected to the front ends of check valves 4, 4', and 4" at the outlet ports of the pumps 2, 2', and 2", and control valves 30, 30', and 30" are disposed in the sub-pipes 20, 20', and 20", respectively. Further, as shown in FIG. 12 (c), first ends of the sub-pipes 20, 20', and 20" may be connected to the front ends of the check valves 4, 4', and 4" disposed at the outlet ports of the pumps 2, 2', and 2", respectively, second ends of the sub-pipes may be connected to a header 22, and the header 22 may be connected to the pressure tank 5.

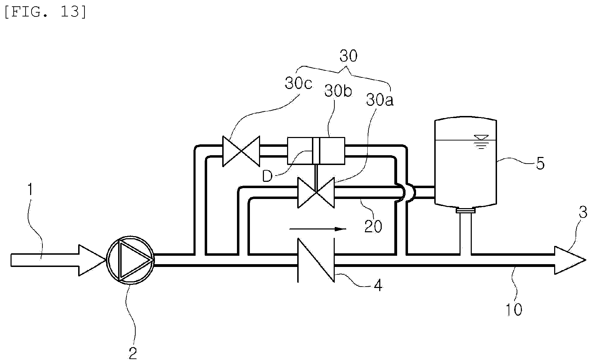

FIG. 13 shows an embodiment of a control valve applied to a system in which a sub-pipe is connected to a pressure tank. The control valve used for this embodiment, the same as the control valve shown in FIG. 10, includes an actuator 30b, a valve body 30a, and a needle valve 30c. However, the rear end of the valve body 30a is connected to the pressure tank in this embodiment. Further, the front end of the actuator 30b may be connected to the sub-pipe connected to the front side of the check valve in the main pipe or to the front end of the check valve, and the rear end of the actuator 30b may be connected to the sub-pipe connected to the rear end of the check valve in the main pipe, or the pressure tank, or the rear side of the check valve. The operation of the control valve is the same as that of the embodiment shown in FIG. 10, so the detailed description is not provided here.

On the other hand, though not shown in the figures, in a system having a main pipe 10 that is a circulation pipe, gas in the main pipe 10 flows to a pressure tank 5 through a sub-pipe 20, so the sub-pipe 20 may be used to discharge the gas in the main pipe 10.

In most work sites, a check valve, an electric valve (not shown) for controlling flow rate, and a manual shutoff valve (not shown) are installed at the outlet port of a pump, so a large friction loss is caused by the valves and a large pressure difference is generated between the front end of the check valve 4 and the joint of a pressure tank 5 and a main pipe 10. Accordingly, an environment in which fluid can flow to the pressure tank through a sub-pipe where there is little friction loss is made and a large pressure difference is generated when a pump is operated with the electric valve (not shown) for controlling a flow rate closed by about 10 to 50% to control a flow rate, so the technique for preventing dead water can be more effectively used. Further, it may be possible to control the amount of fluid flowing to the sub-pipe 20 by adjusting the degree of opening of the electric valve (not shown) for controlling a flow rate.

Further, a diffuser 50 connected to the sub-pipe 20 may be additionally provided in the pressure tank 5 so that the fluid supplied through the sub-pipe 20 is uniformly distributed in the pressure tank 5. The diffuser 50, as shown in FIG. 10 (a), is connected to the sub-pipe 20 connected to the rear side of the control valve 30, is annularly disposed around the inner side of the pressure tank 5, and has a plurality of spray holes through the surface thereof. Further, the diffuser 50, as shown in FIG. 10 (b), has an end curved in an elbow shape. In this case, fluid moved down while turning around the inner side of the pressure tank. Further, the diffuser 50 may be formed in various types such as a fixed type or a floating type.

Although the present invention was described in detail with reference to embodiments, the scope of the present invention is not limited thereto and includes the range substantially equivalent to the embodiments.

## Claims

1. A water piping system having a function of alleviating slamming of a check valve, the system comprising:

   a pump pressurizing fluid;
   a main pipe for delivering the fluid pressurized by the pump;
   a check valve disposed at an outlet port of the pump to prevent backflow of fluid;
   a sub-pipe having both ends connected to a front side and a rear side of the check valve, respectively, to supply some of fluid at the rear sides of the check valve to the front side of the check valve therethrough when the pump is stopped; and
   a control valve disposed in the sub-pipe to open and close a flow channel.

2. The system of claim 1, wherein the pump comprises a plurality of pumps connected to each other in parallel, the sub-pipe comprises a plurality of sub-pipes connected to the main pipe and respectively connected to front ends of check valves disposed at outlet ports of the pumps, and the control valve is disposed in each of the sub-pipes.

3. The system of claim 2, wherein the sub-pipes have first ends respectively connected to the front ends of the check valves disposed at the outlet ports of the pumps and second ends connected to a header, and the header is connected to the main pipe.

4. The system of any one of claims 1 to 3, wherein the control valve is closed after a predetermined period of time passes from the moment when the pump is stopped.

5. The water piping system of claim 4, further comprising a controller controlling opening and closing of the control valve, wherein the controller closes the control valve after a predetermined period of time passes from the moment when the pump is stopped.

6. The system of claim 4, further comprising:

   a controller controlling opening and closing of the control valve;
   a first pressure sensor sensing pressure at the front side of the check valve of the main pipe; and
   a second pressure sensor sensing pressure at a rear side of the check valve of the main pipe,
   wherein the controller receives and compares pressures at the front side and the rear side of the check valve sensed by the first pressure sensor and the second pressure sensor, and closes the control valve after a predetermined period of time passes when the pressure at the rear side of the check valve is higher than the pressure at the front side of the check valve as the result of comparing.

7. The system of claim 4, further comprising a differential pressure sensor sensing a pressure difference between the front side and the rear side of the check valve, wherein the control valve closes after a predetermined period of time passes when it is determined that pressure at the rear side is higher than pressure at the front side of the check valve on the basis of the pressure difference sensed by the differential pressure sensor.

8. The system of claim 4, further comprising a flow rate sensor disposed at the rear side of the check valve of the main pipe,
wherein the control valve closes after a predetermined period of time passes when it is determined that the pump has been stopped on the basis of flow of fluid sensed by the flow rate sensor.

9. The system of claim 4, wherein the control valve is a mechanical slow closing valve that is closed after a predetermined period of time passes from the moment when the pump is stopped.

10. The system of claim 9, wherein the control valve is a slow closing check valve.

11. The system of claim 4, wherein the control valve includes:

a valve body disposed in the sub-pipe connecting a front end and a rear end of the check valve in the main pipe; and
an actuator having a disc dividing an inside horizontally to the left and right therein, having both ends connected to the front end and the rear end of the check valve in the main pipe, respectively, and opening and closing the valve body when the disc is moved by a pressure difference between the front end and the rear end of the check valve.

12. The system of claim 11, further comprising a needle valve disposed at a front side of the actuator.

13. The system of claim 1, wherein the sub-pipe connected to the front side of the check valve has an end extending in the main pipe and curved toward the check valve.

14. The system of claim 1, wherein the sub-pipe connected to the front side of the check valve has an end extending in the main pipe and diagonally disposed toward the check valve.

15. The system of claim 1, wherein a pressure tank is connected between a rear side of the control valve in the sub-pipe and the rear side of the check valve.

16. The system of claim 15, wherein the control valve includes:

a valve body disposed in the sub-pipe having a front end connected to a front end of the check valve of the main pipe and a rear end connected to the pressure tank; and
an actuator having a disc dividing an inside horizontally to the left and right therein, having both ends connected to the front end and the rear end of the check valve, respectively, and opening and closing the valve body when the disc is moved by a pressure difference between the front end and the rear end of the check valve.

17. The system of claim 16, further comprising a needle valve disposed at a front side of the actuator.

18. The system of claim 15, wherein the pump comprises a plurality of pumps connected to each other in parallel, the sub-pipe comprises a plurality of sub-pipes connected to the pressure tank and respectively connected to front ends of check valves disposed at outlet ports of the pumps, and the control valve is disposed in each of the sub-pipes.

19. The system of claim 18, wherein the sub-pipes have first ends respectively connected to the front ends of the check valves disposed at the outlet ports of the pumps and second ends connected to a header, and the header is connected to the pressure tank.

20. The system of any one of claims 17 to 19, further comprising a diffuser disposed in the pressure tank and connected to the sub-pipe,
wherein the diffuser is connected to the sub-pipe connected to a rear side of the control valve, is annularly disposed around an inner side of the pressure tank, and has a plurality of spray holes formed through a surface thereof.

21. The system of any one of claims 17 to 19, further comprising a diffuser disposed in the pressure tank and connected to the sub-pipe,
wherein the diffuser is connected to the sub-pipe connected to a rear side of the control valve and has an end curved in an elbow shape.

22. A method of controlling the water piping system of claims 1 to 21, the method comprising:

    delivering fluid through the main pipe by operating the pump;
    opening the control valve disposed in the sub-pipe;
    monitoring whether the pump is operated; and
    supplying fluid at the rear side of the check valve to the front side of the check valve through the sub-pipe by keeping the control valve open for a predetermined period of time when the pump is stopped, and closing the control valve after a predetermined period of time passes.

23. A method of controlling the water piping system of claims 1 to 21, the method comprising:

    delivering fluid through the main pipe by operating the pump;
    opening the control valve disposed in the sub-pipe;
    sensing pressure at the front side and pressure at the rear side of the check valve of the main pipe; and
    comparing the sensed pressures at the front side and the rear side of the check valve and closing the control valve after a predetermined period of time passes, when the pressure at the rear side of the check valve is higher than the pressure at the front side of the check valve, as a result of the comparing.

[FIG. 1]

[FIG. 2]

(a)

(b)

(c)

[FIG. 3]

30   open   20

1

3

4

2

(a) Pump in operation   10

Closed after
predetermined   20
period of time

30

1

3

4

2

(b) Pump stopped   10

[FIG. 4]

[FIG. 5]

[FIG. 6]

[FIG. 7]

[FIG. 8]

[FIG. 9]

[FIG. 10]

[FIG. 11]

(a)

(b)

[FIG. 12]

(a)

(b)

(c)

[FIG. 13]

[FIG. 14]

(a)

(b)

## INTERNATIONAL SEARCH REPORT

| International application No. |
|---|
| **PCT/KR2016/010275** |

| A. CLASSIFICATION OF SUBJECT MATTER |
|---|
| *F17D 1/20(2006.01)i, F17D 5/00(2006.01)i, F16L 55/045(2006.01)i, F17D 1/14(2006.01)i* |
| According to International Patent Classification (IPC) or to both national classification and IPC |

| B. FIELDS SEARCHED |
|---|
| Minimum documentation searched (classification system followed by classification symbols) |
| F17D 1/20; F17D 1/07; F04F 7/02; F16K 17/02; F16K 31/163; F16L 55/04; F16L 55/045; F16K 15/03; F17D 5/00; F17D 1/14 |
| Documentation searched other than minimum documentation to the extent that such documents are included in the fields searched<br>Korean Utility models and applications for Utility models: IPC as above<br>Japanese Utility models and applications for Utility models: IPC as above |
| Electronic data base consulted during the international search (name of data base and, where practicable, search terms used)<br>eKOMPASS (KIPO internal) & Keywords: water hammer prevention, main pipe, secondary pipe, pump, check valve, pressure and control valve |

| C. DOCUMENTS CONSIDERED TO BE RELEVANT | | |
|---|---|---|
| Category* | Citation of document, with indication, where appropriate, of the relevant passages | Relevant to claim No. |
| Y | KR 10-2010-0015148 A (SEOUL METROPOLITAN GOVERNMENT) 12 February 2010<br>See paragraphs [0012]-[0019] and figures 1-2. | 1-3,22-23 |
| A | | 4-21 |
| Y | JP 2001-324083 A (MITSUBISHI HEAVY IND., LTD.) 22 November 2001<br>See paragraphs [0021], [0027]-[0028], [0031] and figures 3-4. | 1-3,22-23 |
| Y | KR 10-2014-0033960 (SEOKWANG BOOSTER ENG. CO., LTD.) 19 March 2014<br>See paragraphs [0013], [0021], [0023] and figure 1. | 2-3 |
| A | KR 20-0438619 (KYUNG SUNG ENGINEERING CO., LTD.) 27 February 2008<br>See abstract; paragraphs [0047]-[0056]; and figures 3-5. | 1-23 |
| A | KR 10-0441356 (KABUSHIKI KAISHA YOKOTA SEISAKUSHO et al.)<br>18 September 2004<br>See page 3, line 55-page 5, line 62 and figures 1-5. | 1-23 |

| ☐ Further documents are listed in the continuation of Box C. | ☒ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 16 DECEMBER 2016 (16.12.2016) | **16 DECEMBER 2016 (16.12.2016)** |
| Name and mailing address of the ISA/KR<br>Korean Intellectual Property Office<br>Government Complex-Daejeon, 189 Seonsa-ro, Daejeon 302-701, Republic of Korea<br>Facsimile No. 82-42-472-7140 | Authorized officer<br><br>Telephone No. |

Form PCT/ISA/210 (second sheet) (January 2015)

INTERNATIONAL SEARCH REPORT
Information on patent family members

| International application No. |
| --- |
| **PCT/KR2016/010275** |

| Patent document cited in search report | Publication date | Patent family member | Publication date |
| --- | --- | --- | --- |
| KR 10-2010-0015148 A | 12/02/2010 | NONE | |
| JP 2001-324083 A | 22/11/2001 | NONE | |
| KR 10-2014-0033960 A | 19/03/2014 | KR 10-1392847 B1 | 27/05/2014 |
| KR 20-0438619 Y1 | 27/02/2008 | NONE | |
| KR 10-0441356 B1 | 18/09/2004 | CN 1127636 C | 12/11/2003 |
| | | CN 1220726 A | 23/06/1999 |
| | | JP 3777516 B2 | 24/05/2006 |
| | | JP 3993637 B2 | 17/10/2007 |
| | | US 6102072 A | 15/08/2000 |
| | | WO 97-038249 A1 | 16/10/1997 |
| | | WO 97-038250 A1 | 16/10/1997 |

Form PCT/ISA/210 (patent family annex) (January 2015)

**EP 3 293 439 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 101487748